# EUROPEAN PATENT APPLICATION

(11) **EP 2 286 667 A2**
(43) Date of publication of application: **23.02.2011**
(21) Application number: 09013290.3
(22) Date of filing: 21.10.2009
(51) Int. Cl.: A21B 3/13

(54) **Disposable container and carrier for a disposable container**

(30) Priority: 07.08.2009 DE 202009010682 U
(71) Applicant: Continental Packaging (Thailand) Co., Ltd., Bangplee, Samutprakarn 10540 (TH)
(72) Inventor: Manit Kamolsuwan, Bangkok 10110 (TH)
(74) Representative: Schleitzer, Dirk-Karsten

(57) **Abstract**

This invention relates to a disposable container (2) for baking and/or distributing foodstuffs, comprising a bottom (16) and a peripheral side wall (14), in particular a muffin mold, **characterized in that** the side wall (14) has at least one substantially horizontal rupture line (17) or breaking edge so that the side wall (14) can be split and/or tom up and/or separated at least partially along the rupture line (17) or breaking edge.

## Description

This invention relates to a disposable container for baking and/or distributing foodstuffs, comprising a bottom and a peripheral side wall, in particular a muffin mold. Moreover, this invention relates to a carrier for at least one disposable container of the above-mentioned type, comprising as a carrier a planar element having at least one opening for receiving the disposable container, said planar element comprising retaining portions for the disposable container, which protrude into the opening, said retaining portions being bendable transversely to the plane of the planar element, and wherein the disposable container can be retained between the retaining portions by being pushed from above into the opening.

From DE 37 06 288 C2, a tray-type carrier having a plurality of openings for cup-shaped baking molds is known. The carrier has a number of rupture lines forming carrier portions, with each carrier portion having at least one opening for a baking mold. The presence of the rupture lines allows for the carrier to be subdivided into portions, which may hold any number of baking molds. The cup-shaped baking molds each have a snap-in part, which is produced at the upper rim of the baking mold itself. This is to allow for the baking mold to be removably snapped into the carrier. The snap-in part is formed in that the rim of the baking mold is first bent outwards, then inwards again, and then outwards again, so that successively bent portions are created. In order to turn out a cake from the baking mold and remove the cake for consumption, it is suggested to push the carrier portions downwards away from the rim of the baking mold, and then to take hold of the snap-in part at two opposite sides and pull it apart. The side walls of the baking molds known from DE 37 06 288 C2 further have folds and/or bends extending in a vertical direction, which are meant to facilitate turning the cake or foodstuff out of the baking molds.

From WO 2006/057662 A2, a carrier for a plurality of disposable containers for baking foodstuffs is known, which comprises a planar element, wherein a plurality of openings for receiving the containers are provided in said planar element, and the planar element comprises retaining portions protruding into the opening for the disposable containers. When a container is pushed in, the retaining portions are pushed from above into the opening so that the disposable container is retained in the opening. With the retaining portions being applied laterally to an outer wall of the container.

Removing the foodstuffs from the known disposable containers for baking and/or distributing foodstuffs is complicated and, in general, not possible without a change in shape of the baked foodstuff or pieces of foodstuff crumbling off. Furthermore, displaying foodstuffs in the known disposable containers is in general not very pleasing to the eye. The same is true for removing the foodstuffs, which in general results in the consumer's hands and fingers being soiled. In the carriers known from the state of the art, the known disposable containers are in general only insufficiently retained or secured against dropping. Removing the disposable containers is difficult. Displaying the disposable containers in the known carrier trays is not very pleasing to the eye, either.

It is the object of this invention to develop a disposable container and a corresponding carrier respectively of the type mentioned in the introduction so that the disadvantages described before do not occur.

In the disposable container of the type mentioned in the introduction, the above-mentioned object is achieved in a first alternative embodiment of the invention in that the side wall has at least one substantially horizontal rupture line or breaking edge, so that the side wall can be split and/or separated at least partially along the rupture line or breaking edge. Thereby, it is easily possible to remove a foodstuff, such as for instance a cake, from the disposable container, or partially consume it therefrom, after some areas of the side wall, along the rupture line or breaking edge, have been split from the remaining side wall and/or separated from the disposable container. Also, aesthetic consumption of the foodstuff is possible, wherein once the side wall has been split and/or separated, the disposable container can easily be retained at the remaining side wall and at the bottom. It is to be understood that the inventive disposable container can also have multiple rupture lines, which can be arranged preferably in parallel to each other. It is also possible for a spiral rupture line to be provided, so that the side wall can be split and/or separated like a bowl.

Furthermore, it is to be understood that parts of the side wall may also be completely separable in order to ensure free access to the foodstuff. It is just as well possible for the side wall to be only locally torn in or separated, wherein parts of the side wall can be bent outwards or upwards in order to facilitate access to the foodstuff. E.g. as the foodstuff is consumed, the side wall can be further torn in or separated portion-wise from the disposable container. Furthermore, in addition to the horizontal rupture line or breaking edge, other rupture lines or breaking edges may be provided, e.g. at least one vertical rupture line or breaking edge intersecting the horizontal rupture line or breaking edge and facilitating separation of individual parts of the side wall. Furthermore, it is to be noted that the inventive disposable container preferable constitutes the primary packaging of the foodstuff. I.e., the foodstuff is filled in directly into the disposable container and can then be baked directly inside the disposable container and/or sold therein, as required.

In an alternative embodiment of the invention, for achieving the above mentioned objects, it is provided with respect to a horizontal section through the side wall, when the disposable container is placed on the bottom, for the side wall to have a profile outline over the entire height, which is always curved inwards or convex. In particular, the side wall is realized to be smooth, i.e. not folded and/or not corrugated and/or not bent, with respect to the longitudinal direction and/or the transverse direction, respectively. Depending on the choice of material, from which the disposable container is made, as well as the wall thickness of the side wall, it is possible even with a smooth side wall to ensure a sufficient amount of dimensional stability of the disposable container. The smooth side wall promotes removal of the foodstuff from the disposable container. When the foodstuff is removed from the disposable container, the foodstuff is very easy to turn out due the side wall without edges and bends. Also, when baking foodstuffs in the inventive disposable container, no air bubbles are enclosed in the area of the side wall so that once baked and removed from the disposable container the foodstuff exhibits a substantially smooth surface.

For achieving the objects mentioned in the introduction, it is provided that in a carrier of the inventive type at least one first retaining portion and at least one second retaining portion be provided, with the retaining portions being different in length and/or different in shape so that once pushed inside the opening the container is retained between the retaining portions of different length. Due to the different length and/or shape of the retaining portions, on the one hand, a secure, i.e. positionally stable arrangement of a disposable container inside an opening of the carrier is ensured. In doing so, the position of the disposable container is localized inside the opening by the retaining portions. Nevertheless, a disposable container is easily removed from the carrier for distribution or consumption. The inventive carrier can herein be realized like a tray having a plurality of openings for a plurality of disposable containers. Furthermore, the carrier can be provided not only for transporting the disposable containers and the foodstuffs, but also for displaying foodstuffs on shop floors and/or for storage thereof, wherein several carriers fitted with the disposable containers can be stacked into each other.

The above-mentioned aspects and features of the present invention, as well as the aspects and features of the present invention described hereafter can be realized independently from each other, but also in any combination. In particular, the features mentioned in the sub-claims can be embodied respectively on their own or in any combination of each other, possibly also independently from the features mentioned in the main claims, in an independent aspect of the invention.

Other advantages, features, characteristics, and aspects of the present invention will be apparent from the present description of a preferred embodiment by means of the drawing. In the drawings:
Fig. 1 shows a top view of an inventive carrier for a plurality of disposable containers for baking and/or distributing foodstuffs,
Fig. 2 shows the carrier represented in Fig. 1 with four disposable containers being retained in the carrier,
Fig. 3 shows an inventive disposable container as viewed from the side,
Fig. 4 shows the disposable container represented in Fig. 3 after section-wise separation of the side wall of the disposable container along a rupture line, and
Fig. 5 shows the disposable container represented in Fig. 3 after it has been pushed into the carrier represented in Fig. 1.

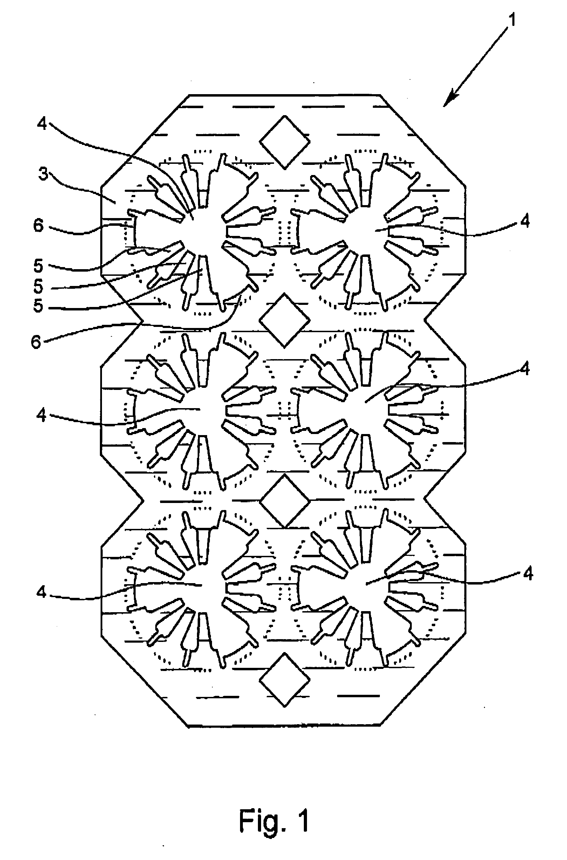

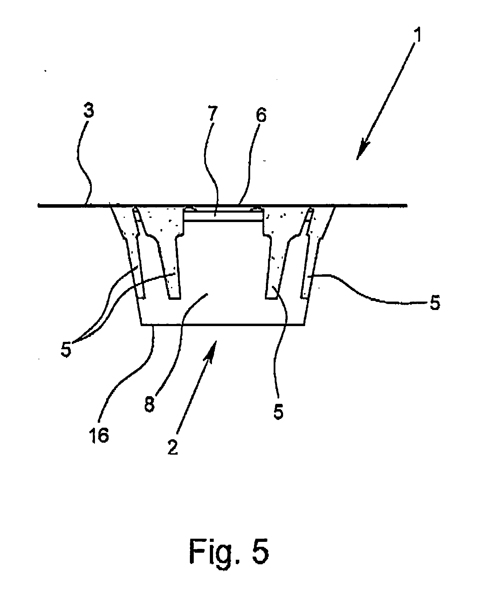

In Fig. 1, a tray-like carrier 1 for a plurality of disposable containers 2 is represented, the disposable container 2 in this instance being a muffin mold for one-time baking of cake dough. The carrier 1 comprises a planar element 3 with a plurality of openings 4 for receiving disposable containers 2, with the planar element 3 comprising retaining portions 5, 6 for the respective disposable container 2, which protrude into the respective openings 4. The retaining portions 5, 6 are bendable transversely to the plane of the planar element 3, wherein the disposable container 2 can be retained between the retaining portions 5, 6 by being pushed from above into the openings 4. Fig. 5 shows a disposable container 2 as being retained after having been pushed into an opening 4 of the planar element 3.

In the embodiment shown, the carrier 1 is formed by the planar element 3, said planar element 3 being realized as a flat plate. However, it is just as well possible for the carrier 1 to have a three-dimensional transport and/or display shape, as it is known from WO 2006/057662 A2, wherein a plurality of carriers 1 can be stacked into each other, if necessary. The carrier 1 can be realized in one color. However, for usage in view of displaying the foodstuffs contained in the disposable containers it is also possible for appropriate promotional printing to be provided on the visible external side of the planar element 3.

Each opening 4 has a plurality of first longer retaining portions 5 and second shorter retaining portions 6. Retaining portions 5, 6 are different in length so that after having been pushed into the opening 4 a disposable container 2 can be retained between the retaining portions 5, 6 of different length. Thereby, secure fastening of the disposable containers 2 inside the openings is ensured.

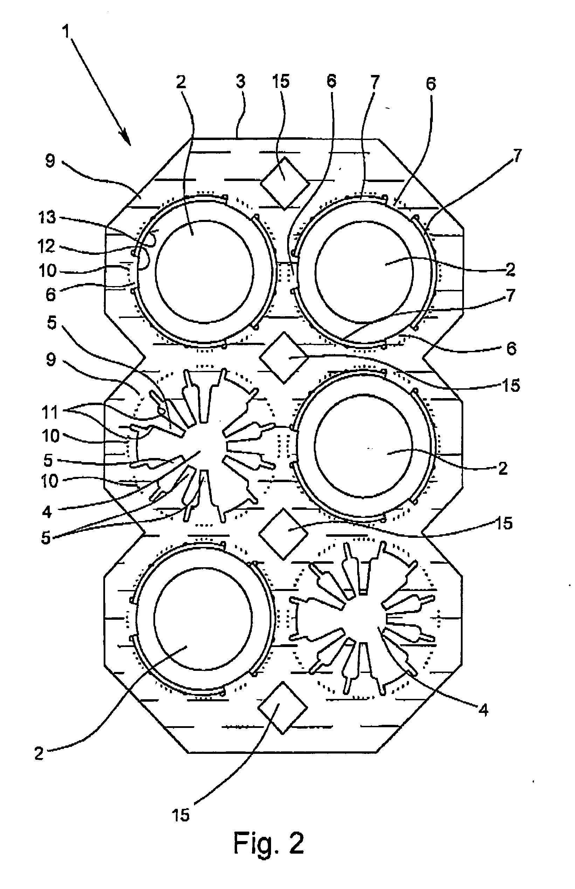

As can be seen in Figs. 2 and 5, the disposable container 2 can be retained between at least one shorter retaining portion 6, which can be applied section-wise to an upper outer rim 7 of the disposable container 2, and at least one longer retaining portion 5, which can be applied to an outer surface area 8 of the disposable container. This will help in sufficiently fastening a disposable container 2 inside an opening 4.

As a result, when a disposable container 2 is pushed into an opening 4, the longer retaining portions 5 are pushed away laterally downwards, with the disposable container 2 being pushed into the opening 4 so deeply that the shorter retaining portions 5 project over the outer rim 7 or are applied thereto from above. Thereby, horizontal and/or vertical slipping of the disposable container 2 inside the opening 4 is largely avoided.

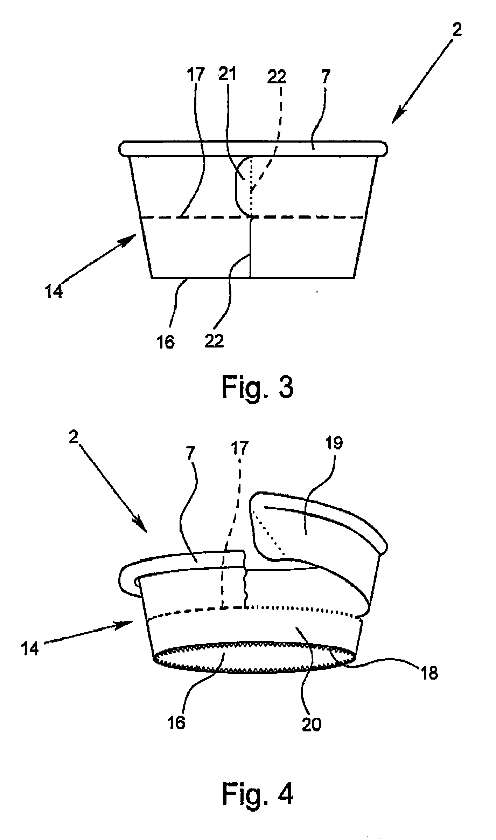

Between the retaining portions 5, 6 and a peripheral area 9 of the planar element 3 limiting the opening 4, perforations 10 and/or creasing edges may be provided, which facilitate bending of the longer retaining portions 5 when a disposable container 2 is pushed into an opening 4. The perforations 10 and/or creasing edges describe a circular shape, thereby substantially defining the cross-sectional shape of the opening 4 and the maximum opening size thereof. However, it is to be understood that the openings 4 may also have any cross-sectional shape depending on the cross-sectional shape of the respective disposable containers 2. In the represented embodiment, the disposable containers 2 are realized in the form of cups or bowls, which is apparent in particular from Fig. 3 and Fig. 5.

The planar element 3 or the carrier 1 can be made of a paper or cardboard-like material. However, in principle, it is also possible for the planar element 3 to be made of plastic material, composite material, or metal, in particular of aluminum. It is essential for the planar element 3 to have sufficient flexural strength or a sufficiently large modulus of elasticity for the disposable containers 2 to be retained. Preferably, the planar element 3 is made integrally, in particular by punching and cutting. This allows for simple and economical manufacturing of the carrier 1.

As is apparent in particular from Figs. 1 and 2, the longer retaining portion 5 can be realized like fingers. Herein, the width of the longer retaining portions 5 may decrease in a radial direction towards the opening center of the opening 4, wherein preferably gradations 11 reducing the width may be provided. Thereby, on the one hand, positioning of the longer retaining portions 5 is ensured when the disposable containers 2 are pushed into the openings 4. On the other hand, secure fastening of the disposable containers 2 inside the openings 4 is obtained, with the longer retaining portions 5 springing back because of the restoring forces of the material while being applied to the outer surface area 8 of the respective disposable container 2.

The shorter retaining portion 6 can be realized as a band-shaped projection protruding in a circumferential direction of the opening 4 or of the circular shape formed by the perforations 10 over the perforation line and a peripheral area 9 of the planar element 3. The peripheral area 9 of the planar element 3 is then according to the represented embodiment limited by the perforations 10 in the planar element 3. The narrow width of the retaining portions 6 ensures high rigidity of the planar element 3 in this area, with the result that the disposable containers 2 can be arranged with high positional stability between the retaining portions 5, 6.

Furthermore, the ratio of the length of a longer retaining portion 5 to the length of a shorter retaining portion 6 can be at least about 4:1, preferably about 6:1. This also helps in securely fastening the disposable containers 2 inside the openings 4.

For the same purpose, when the disposable container 2 is inserted into an opening 4, the outer rim 12 of the shorter retaining portion 6 may not protrude in the direction towards the opening center over the internal surface area 13 of a side wall 14 of the disposable container, or not over the outer rim 7. Thereby, pouring foodstuff, such as cake dough, into a disposable container 2 retained at the carrier is possible without interference from the shorter retaining portion 6. In particular, when baking the foodstuff in the disposable container, the planar element 3 can be prevented from being baked together with the shorter retaining portions 6.

In order to ensure secure fastening of the disposable containers 2 inside the openings 4, the longer retaining portions 5 and the shorter retaining portions 6 can be distributed symmetrically over the circumference of an opening 4. In the represented embodiment, in the circumferential direction, a plurality of longer retaining portions 5 is arranged respectively next to one shorter retaining portion 6. It is to be understood that the embodiment shown with a total of nine longer retaining portions 5 and three shorter retaining portions 6 is only chosen as an example, without limiting the invention to said number of retaining portions 5, 6. In principle, it is also possible to provide more or fewer longer retaining portions 5 and/or shorter retaining portions 6, with the represented embodiment being however particularly preferred.

Adjacent to the peripheral area 9 limiting the opening 4 of the planar element 3, the longer retaining portions 5 and the shorter retaining portions 6 may have the same length in a circumferential direction of the perforation line, or the same width with regard to the planar element 3. The longer retaining portions 5 and the shorter retaining portions 6 can be spaced from each other adjacent to the peripheral area 9 in a circumferential direction by at least 1 mm, preferably at least 2 mm or more. This can be achieved by adequate embossing or punching of the planar element 3. The features described before contribute to the longer retaining portions 5 being easily bendable with respect to the shorter retaining portions 6 downwards with respect to the plane of planar element 3.

Planar element 3 is preferably thermally resistant up to a temperature of at least 100 °C, in particular up to at least 140 °C, so that foodstuff in the disposable containers 2 can be baked together with the carrier 1. Thermal stability may be due to the material of planar element 3 and/or to adequate coating of planar element 3.

It is not shown in detail that planar element 3 may have other perforation lines and/or breaking edges for section-wise separating of surface portions having at least one opening 4 of planar element 3. If required, it is thereby possible to separate one or more disposable containers 2 from the carrier 1, if necessary, with the separated disposable containers 2 being then securely retained in the respectively separated surface portions of planar element 3. Moreover, planar element 3 has other openings 15 which contribute to a decrease in weight of carrier 1 and may possibly promote separation of individual surface portions of planar element 3. Furthermore, sufficient aeration is ensured if several carriers 1 are arranged on top of each other.

In Fig.3, a disposable container 2 for baking and/or distributing foodstuffs, comprising a bottom 16 and a peripheral side wall 14 is represented. The disposable container 2 is a muffin mold Side wall 14 has at least one rupture line 17 or breaking edge extending substantially horizontally so that side wall 14 can be split and/or separated at least partially along the rupture line 17 or breaking edge. The bottom 16 is realized to be substantially circular and pasted together with side wall 14 via adhesive tabs 18, which are provided at the bottom side rim of side wall 14. Herein, the adhesive tabs 18 engage under the bottom 16. Side wall 14 and bottom 16 constitute the shape of a truncated cone, with the upper outer rim 7 of side wall 14 being preferably folded outwards, in particular while forming a bead-like collar. This results in high flexural strength of the disposable container 2.

As apparent from Fig. 4, an upper, preferably band-shaped side wall portion 19 can be split and/or separated at least partially along the rupture line 17 or along a breaking edge of a side wall portion 20 near the bottom of the side wall 14. Not represented in detail is the fact that the side wall 14 could also be separated from the bottom 16 via a rupture line arranged at an adequately low level. Moreover, other horizontally and/or vertically extending rupture lines or other breaking edges may be provided, by which parts of the side wall 14 can be split or separated from the disposable container 2. "Separating" in terms of the invention means partially interrupting the continuous side wall 14 at the rupture line 17 by tearing the side wall 14 in, with the upper side wall portion 19 then remaining at least section-wise connected to the side wall portion 20 near the bottom. By separating side wall 14 into two side wall portions 19, 20, it is possible to bend the upper side wall portion 19 outwards in order to thereby gain easier access to the foodstuff arranged inside the disposable container 2. This may be advantageous when removing the foodstuff from the disposable container 2 or also when consuming the foodstuff. At any rate, foodstuff can be held securely between the hands via the side wall portion 20 near the bottom and connected to the bottom 16, whereby accidentally dropping pieces of the foodstuff from the disposable container 2 is avoided. In relation to displaying foodstuffs, the upper side wall portion 19 can also be separated completely from the side wall portion 20 near the bottom and from the bottom 16 so that a clear view of the foodstuff is ensured.

For tearing up and/or partially removing the side wall 14, a tab 21 may be provided. Preferably, the tab 21 may be formed by an end of the upper side wall portion 19 projecting over the side wall portion 20 near the bottom in a longitudinal or circumferential direction.

The rupture line 17 or breaking edge can be provided peripherally on or in the side wall 14, with the rupture line 17 or breaking edge preferably extending in parallel to the bottom 16. Here, the rupture line 17 or breaking edge may extend at least substantially at halfway up the side wall 14 or below. This makes sure that after the upper side wall portion 19 has been split or separated there remains a sufficiently large side wall portion 20 near the bottom by which the disposable container 2 may be retained.

The rupture line 17 can preferably be realized as a perforation line. In principle, easier tearing or separating of parts of the side wall 14 can also be ensured by adequate linear areas of the side wall 14 which are embossed and have reduced wall thickness in comparison with adjacent areas of side wall 14.

The side wall 14 is preferably realized in band-shape, in particular integrally, wherein further preferably the ends 22 of side wall 14 are connected together, preferably pasted together, except for the end area forming the tab 21.

In order to further facilitate removing the foodstuff from a disposable container 2, it may be provided for the side wall 14 to have over the entire height with respect to a horizontal section through the disposable container 2 a profile outline always curved inwards or convex. Preferably, the side wall 14 can substantially have a circular outline over the entire height This is apparent from Figs. 1 and 2. It is essential for side wall 14 not to be folded and/or not to be corrugated and/or to be free from edges and to be realized as smooth or plane in a circumferential direction.

Here the disposable container 2 may preferably be made of paper or cardboard-like material. However, in principle, manufacturing from plastic material, metallic material, such as aluminum, or composite material is also possible.

In order to ensure sufficient dimensional stability of the disposable container 2, the side wall 14 may have a thickness of between 100 µm and 500 µm, in particular between 200 µm and 300 µm. For the same purpose, the modulus of elasticity of the side wall can be greater than 2000 N/mm², preferably greater than 2500 N/mm², further preferably greater than 3000 N/mm², in particular greater than 3000 N/mm², further in particular greater than 4000 N/mm², or greater than 4500 N/mm².

Nevertheless, in order to ensure light weight of the disposable container 2, the side wall 14 can have a basis weight of less than 200 g/m², preferably of less than 150 g/m², in particular of less than 125 g/m².

In order to ensure high dimensional stability of the disposable container, the height of the side wall 14 is preferably smaller than the diameter of the bottom 16, with the ratio of the height of the side wall 14 to the diameter of the bottom 16 being preferably less than 0.8, preferably less than 0.6, in particular less than 0.4.

Moreover, at least the internal surface area 13 of the side wall 14 and the inner side of the bottom 16 may have a liquid-repellent coating and/or a non-stick coating. Thereby, turning a baked foodstuff out from the disposable container 2 is simplified. It is to be understood that the same effect may also be obtained if the disposable container 2 is made of a material having non-stick characteristics and/or liquid-repellent characteristics.

Furthermore, the disposable container 2 should be thermally resistant up to a temperature of at least 100 °C, preferably at least 140 °C, in order to allow for baking of foodstuff inside the disposable container 2. Here, adequate coating of the side wall 14 and the bottom 16, or else manufacturing the disposable container 2 of an adequate thermally resistant material can be provided.

Although the disposable container 2 is in principle meant for single use, as part of the invention, embodiments are possible which allow for multiple use of the disposable container 2.

While the present invention has been shown and described with reference to particular exemplary embodiments thereof, it will be understood for those skilled in the art that various changes may be made without departing from the spirit and scope of the present invention as defined by the appended claims. It is to be appreciated that the drawings depict only typical embodiments of the invention and are therefore not to be considered limiting of its scope. Further aspects and advantages of this invention are related to the following features which are not restricted to the embodiments shown and described on the basis of the accompanying drawings and which can be provided in any combination:
- a perforation line is provided as a rupture line (17),
- the side wall (14) is band-shaped, preferably integral, and further preferably, the ends (22) of the side wall (14) are connected together, preferably pasted together, while realizing the tab (21),
- the side wall (14) and the bottom (16) form the shape of a truncated cone,
- an upper outer rim (7) of the side wall (14) is preferably bent outwards, in particular while forming a bead-like collar,
- the height of the side wall (14) is smaller than the diameter of the bottom (16), wherein preferably the ratio of the height of the side wall (14) to the diameter of the bottom (16) is less than 0.8, preferably less than 0.6,
- an inner surface area (13) of the side wall (14) has a liquid-repellent and/or liquid-tight coating and/or a non-stick coating,
- the disposable container is thermally resistant up to a temperature of at least 100 °C, preferably at least 140 °C,
- the planar element (3) is made of paper or cardboard-like material,
- the planar element (3) is made integrally, preferably by punching or cutting,
- at least one retaining portion (5, 6) is realized like a finger,
- the width of the longer retaining portion (5) decreases in a radial direction towards the opening center, wherein preferably a gradation (11) reducing the width is provided,
- the ratio of the length of the longer retaining portion (5) to the length of the shorter retaining portion (6) is at least about 4:1, preferably about 6:1,
- when the disposable container (2) is inserted into an opening (4), the outer rim (12) of the shorter retaining portion (6) does not substantially protrude over the side wall of the disposable container (2) in a radial direction towards the opening center of the opening (4),
- the longer retaining portions (5) and the shorter retaining portions (6) are distributed symmetrically over the circumference of the opening (4),
- in a circumferential direction of the opening (4), a plurality of longer retaining portions (5) is arranged adjacent to one shorter retaining portion (6), respectively,
- the longer retaining portions (5) and the shorter retaining portions (6) have a same length adjacent to the peripheral area (9) limiting the opening (4) of the planar element (3) in a circumferential direction of the opening (4),
- the longer retaining portions (5) and the shorter retaining portions (6), adjacent to the peripheral area (9) limiting the opening (4) in a circumferential direction of the opening (4), are spaced from each other by at least 1 mm, preferably at least 2 mm or more,
- the planar element (3) is thermally resistant up to a temperature of at least 100 °C, preferably at least 140 °C,
- the planar element (3) has other perforations and/or breaking edges for section-wise separating at least surface portions of the planar element (3) having at least one opening (4).

## Claims

1. A disposable container (2) for baking and/or distributing foodstuffs, comprising a bottom (16) and a peripheral side wall (14), in particular a muffin mold, **characterized in that** the side wall (14) has at least one substantially horizontal rupture line (17) or breaking edge so that the side wall (14) can be split and/or torn up and/or separated at least partially along the rupture line (17) or breaking edge.

2. The disposable container according to claim 1, **characterized in that** an upper, preferably band-shaped side wall portion (19) of the side wall (14) can be split and/or separated at least partially along the rupture line (17) or breaking edge of a side wall portion (20) of the side wall (14) near the bottom (16) and/or that a tab (21) for tearing up and/or partially removing the side wall (14) is provided, wherein, preferably, the tab (21) is formed by a part of the upper side wall portion (19), which is protruding in a longitudinal direction with respect to the side wall portion (20) near the bottom (16).

3. The disposable container according to claim 1 or 2, **characterized in that** a peripheral rupture line (17) or breaking edge is provided, with the rupture line (17) or breaking edge preferably extending in parallel to the bottom (16).

4. The disposable container according to any of the preceding claims, **characterized in that** the rupture line (17) or breaking edge extends at least substantially at halfway up the side wall (14) or below.

5. A disposable container (2) for baking and/or distributing foodstuffs, comprising a bottom (16) and a peripheral side wall (14), in particular a muffin mold, further in particular according to any of the preceding claims, **characterized in that** the side wall (14) with respect to a horizontal section through the side wall (14) has a profile contour always curved inwards or convex over the entire height, wherein, preferably, the side wall (14) substantially has a circular contour over the entire height.

6. The disposable container according to any of the preceding claims, **characterized in that** the side wall (14) and/or the bottom (16) are made of paper or cardboard-like material, wherein, preferably, the side wall has a thickness of between 100 µm and 500 µm, in particular between 200 µm and 300 µm and/or the modulus of elasticity of the side wall (14) has a value greater than 2000 N/mm², preferably greater than 3000 N/mm², further preferably greater than 3500 N/mm², and particularly preferably greater than 4000 N/mm² and/or the side wall (14) has a basis weight of less than 200 g/m², preferably less than 150 g/m², in particular less than 125 g/m².

7. A carrier (1) for at least one disposable container (2) for baking and/or distributing foodstuffs, in particular for a muffin mold, further particularly for a disposable container (2) according to any of the preceding claims, comprising as a carrier at least one planar element (3) having at least one opening (4) for receiving the disposable container (2), said planar element (3) having retaining portions (5, 6) protruding into the opening (4) for the disposable container (2), said retaining portions (5, 6) being bendable transversely to the plane of the planar element (3), and wherein the disposable container (2) can be retained between the retaining portions (5, 6) by being pushed from above into the opening (4), **characterized in that** at least one first retaining portion (5) and one second retaining portion (6) are provided, with the retaining portions (5, 6) being different in length and/or in shape such that the disposable container (2) can be retained between the different retaining portions (5, 6) after having been pushed into the opening (4).

8. The carrier according to claim 7, **characterized in that** the disposable container (2) can be retained between at least one shorter retaining portion (6) that can be applied to an upper outer rim (7) of the disposable container (2) and at least one longer retaining portion (5) that can be applied to one outer surface area (8) of the disposable container (2).

9. The carrier according to claim 7 or 8, **characterized in that** between the retaining portions (5, 6) and a peripheral area (9) limiting the opening (4) of the planar element (3), perforations (10) and/or creasing or bending edges are provided.

10. The carrier according to any of the preceding claims, **characterized in that** the shorter retaining portion (6) is realized as a projection, which is band-shaped in a circumferential direction, protruding over the outer rim of the peripheral area (9) limiting the opening (4) of the planar element (3).
